# EUROPEAN PATENT SPECIFICATION

(11) **EP 4 089 224 B1**
(45) Date of publication and mention of the grant of the patent: **16.07.2025**
(21) Application number: 20911900.7
(22) Date of filing: 22.12.2020
(51) Int. Cl.: D06F 37/06, D06F 23/02

(54) **LAUNDRY LIFTING DEVICE FOR WASHING MACHINE, AND DRUM WASHING MACHINE**
WÄSCHEHEBEVORRICHTUNG FÜR WASCHMASCHINE UND TROMMELWASCHMASCHINE
DISPOSITIF DE LEVAGE DE LINGE POUR MACHINE À LAVER ET MACHINE À LAVER À TAMBOUR

(30) Priority: 09.01.2020 CN 202010022025
(43) Date of publication of application: 16.11.2022
(73) Proprietor: Qingdao Haier Drum Washing Machine Co., Ltd., Qingdao, Shandong 266101 (CN); HAIER SMART HOME CO., LTD., Laoshan District Qingdao Shandong 266101 (CN)
(72) Inventor: ZHAO, Zhiqiang, Qingdao, Shandong 266101 (CN); XU, Sheng, Qingdao, Shandong 266101 (CN); LV, Peishi, Qingdao, Shandong 266101 (CN)
(74) Representative: Beck & Rössig European Patent Attorneys
(86) International application number: PCT/CN2020/138185
(87) International publication number: WO 2021/139519

(56) References cited:
- WO-A1-2019/165924
- CN-A- 106 436 194
- CN-A- 109 402 952
- CN-A- 110 195 306
- CN-A- 110 195 314
- CN-A- 110 195 331
- CN-U- 205 856 868
- CN-U- 205 856 868
- JP-A- 2009 247 719
- JP-A- 2011 078 483

## Description

The present invention relates to the technical field of laundry equipment, in particular to a clothes lifting device for a washing machine comprising the features of the preamble portion of claim 1 and further to a drum washing machine including said clothes lifting device.

As a most widely used household appliance in daily life of people, the washing machine helps people get rid of the trouble of washing clothes and brings great convenience to people. However, the washing machine has certain defects such as long time consumption and large water consumption, along with social development, water resources as important natural resources become more and more important, the water-saving awareness of people is improved, and how to realize the water-saving function of the washing machine is particularly important.

In order to solve the water-saving problem of the washing machine, some patents, such as CN 104005201 B, are provided, the invention relates to a drum washing machine which includes a box body, an inner drum and an outer drum are arranged in the box body, a door seal is arranged between the outer drum and the box body, the inner drum is connected with a driving device. The inner drum is a hole-free inner drum, the inner drum is a conical drum with a small diameter at the drum bottom and a large diameter at the drum opening, the drum opening of the inner drum is folded inwards in an arc shape, a water inlet guide pipe is arranged on the door seal, one end of the water inlet guide pipe is connected with a washing water rapid heating device, and the other end of the water inlet guide pipe penetrates through the door seal and extends into the inner drum. A water outlet and a water pressure detection device are arranged on the outer drum. According to the technical solution, the inner drum is a hole-free inner drum, water feeding of the inner drum is achieved through the water inlet guide pipe arranged on the door seal, water drainage is achieved in the dewatering process through the shape of the inner drum, and therefore water can be prevented from being stored between the inner drum and the outer drum, and the washing water consumption is greatly reduced.

According to the drum washing machine with the hole-free inner drum, a water inlet mode of the drum washing machine is achieved through the door seal, the door seal is mainly used for achieving sealing of a drum opening of the outer drum of the washing machine, and the sealing effect of the door seal is easily affected and is not easy to achieve due to the fact that the water inlet guide pipe is arranged on the door seal; besides, drainage of the patent is mainly achieved through combination of a drum-shaped structure and high-speed driving of a driving device, the drum-shaped structure is complex, the drainage effect and the sealing effect of the inner drum cannot be guaranteed, and many problems exist in practical application.

Besides, how to solve the drainage problem of the drum washing machine in the washing process and the drainage problem of the drum washing machine in the dewatering process are major problems faced by hole-free inner drums.CN 108866921 A discloses a washing machnine including an outer drum, wherein the front end of the outer drum is fixed to the inner wall of a machine body, the inner drum is rotatably arranged in the outer drum, and a centrifugal valve is arranged on the side wall of the inner drum. During washing, the centrifugal valve is closed, water is contained in the inner drum, and no water exists between the inner drum and the outer drum; during dewatering, the centrifugal valve is opened, the washing water is discharged to the space between the inner drum and the outer drum and is discharged from the outer drum. CN 108866921 A proposes to use the centrifugal valve to perform centrifugal drainage so as to solve the drainage problem of the hole-free drum washing machine, however, due to the fact that thread scraps are inevitably generated in the washing process, preventing the thread scraps from entering the centrifugal valve along with water flow is the precondition for ensuring normal work of the centrifugal valve, particularly, the centrifugal valve needs to be closed in the washing and rinsing stages of the drum washing machine, a spring is generally contained in the structure of the centrifugal valve, once the thread scraps are wound on the spring, the thread scraps are difficult to remove, and normal work of the spring is seriously influenced, the centrifugal valve cannot be closed in place. Therefore, the water-saving and self-cleaning effects of the hole-free inner drum cannot be realized.

A clothes lifting device for a washing machine comprising the features of the preamble portion of claim 1 is know from WO 2019/165924 A. The clothes lifting device comprises a lifting shell secured to an inner wall of a drum to thereby for an accommodation chamber for a centrifugal drainage assembly. Broad notches at the foot of the shell allow washing water to flow into the accommodation space.

Further clothes lifting devices are known from JP 2009 247719 A and CN 205856868 U.

The object of the present invention is to improve working reliability of the centrifugal drainage assembly.

This technical problem is solved by a clothes lifting device according to claim 1 and a washing machine according to claim 11.

Advantageous embodiments are indicated in further claims.

The clothes lifting device of the disclosure can be installed on the inner wall of the inner drum of the drum washing machine, and in the clothes washing process, clothes are lifted to a certain height along with rotation of the inner drum to be beaten The centrifugal drainage assembly is integrally arranged in the clothes lifting device, the initial state of the centrifugal drainage assembly is the closed state, the inner drum is kept closed to independently contain washing water, and the centrifugal drainage assembly can be opened for drainage under the action of centrifugal force, so that drainage of the drum washing machine with the hole-free inner drum is achieved.

According to the drum washing machine, the inner drum door is installed on the drum opening of the inner drum, the hole-free drum design is adopted in the inner drum, the inner drum door and the inner drum jointly form the independent washing cavity, washing water is independently contained when clothes are washed, the space between the inner drum and the outer drum does not need to be filled with the washing/rinsing water, and the washing water consumption of the washing machine is greatly reduced; the possibility of dirt adhesion between the inner drum and the outer drum is avoided; the user health and the user experience are greatly improved, and water resources are greatly saved.

According to the centrifugal drainage assembly, the limiting structures which are arranged on the sealing plunger and the plunger base are matched with the elastic piece, so that elastic abutting of the sealing plunger is achieved, the sealing plunger is kept in a normally-closed state, the hole-free inner drum is kept in a closed state, and the functional effects of water saving and self-cleaning of the drum washing machine with the hole-free inner drum are achieved.

In the reciprocating motion process of the centrifugal drainage assembly in the closed state and the drainage state, the elastic piece is sealed in a sealing sleeve through a sealing portion, thread scraps are prevented from being hung, and the working stability of the centrifugal drainage assembly is ensured.

The filtering assemblies are arranged on the water inlets of the body and used for filtering water entering the accommodating chamber. Thus, the accommodating chamber where the centrifugal drainage assembly is located becomes an area independent of the interior of the inner drum, the area is kept communicating with the inner drum through the water inlets, the filtering assemblies can effectively filter thread scraps in water entering from the water inlets, the centrifugal drainage assembly is located in an environment without thread scraps or with few thread scraps. The possibility of attachment of thread scraps is fundamentally avoided, and the working reliability of the centrifugal drainage assembly is effectively guaranteed.

In the drawings:
Fig. 1 is a principle schematic diagram of the drum washing machine in the embodiment of the disclosure;
Fig. 2 is a partial enlarged view of the clothes lifting device for the washing machine assembled on the inner drum in embodiment 1;
Fig. 3 is a three-dimensional structure schematic diagram of the clothes lifting device for the washing machine in embodiment 2 and embodiment 3 of the disclosure;
Fig. 4 is a front view of the clothes lifting device for the washing machine in embodiment 2 and embodiment 3 of the disclosure;
Fig. 5 is a three-dimensional structure schematic diagram of the clothes lifting device for the washing machine in embodiment 2 of the disclosure;
Fig. 6 is a section view along an A-A plane in the Fig. 4 of the clothes lifting device for the washing machine in embodiment 2 of the disclosure;
Fig. 7 is a partial enlarged view of the Fig. 6 of the clothes lifting device for the washing machine in embodiment 2 of the disclosure (first implementation mode);
Fig. 8 is a partial enlarged view of the Fig. 6 of the clothes lifting device for the washing machine in embodiment 2 of the disclosure (second implementation mode);
Fig. 9 is a partial enlarged view of the Fig. 6 of the clothes lifting device for the washing machine in embodiment 2 of the disclosure (third implementation mode);
Fig. 10 is a section view along a B-B plane in the Fig. 4 of the clothes lifting device for the washing machine in embodiment 2 of the disclosure;
Fig. 11 is a three-dimensional structure schematic diagram of the clothes lifting device for the washing machine in embodiment 3 of the disclosure;
Fig. 12 is a section view along an A-A plane in the Fig. 4 of the clothes lifting device for the washing machine in embodiment 3, which is not part of the invention;
Fig. 13 is a section view along an A-A plane in the Fig. 4 of the clothes lifting device for the washing machine in embodiment 3 according to the present invention; and
Fig. 14 is a principle schematic diagram of the drum washing machine in embodiment 5 of the disclosure.

The clothes lifting device for the washing machine and the drum washing machine are described in detail according to the following drawings.

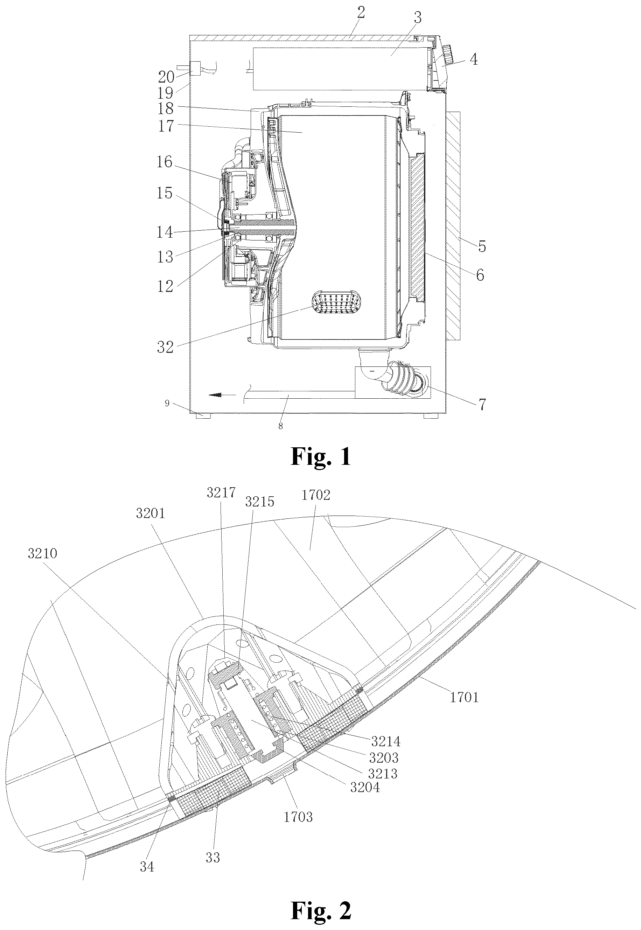

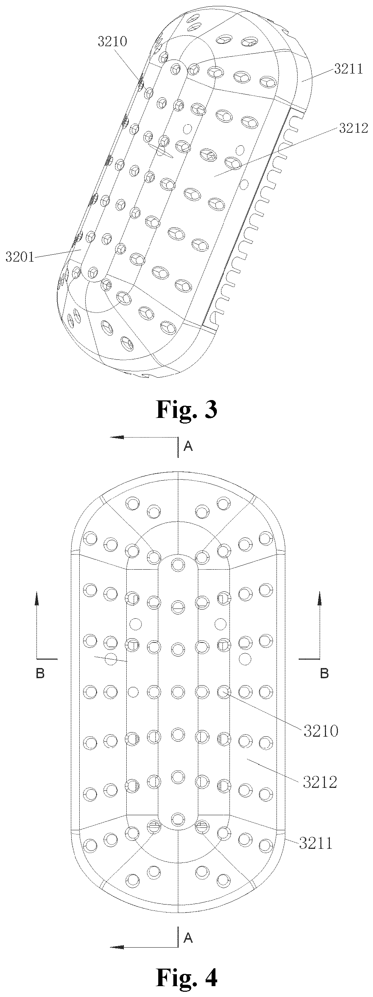

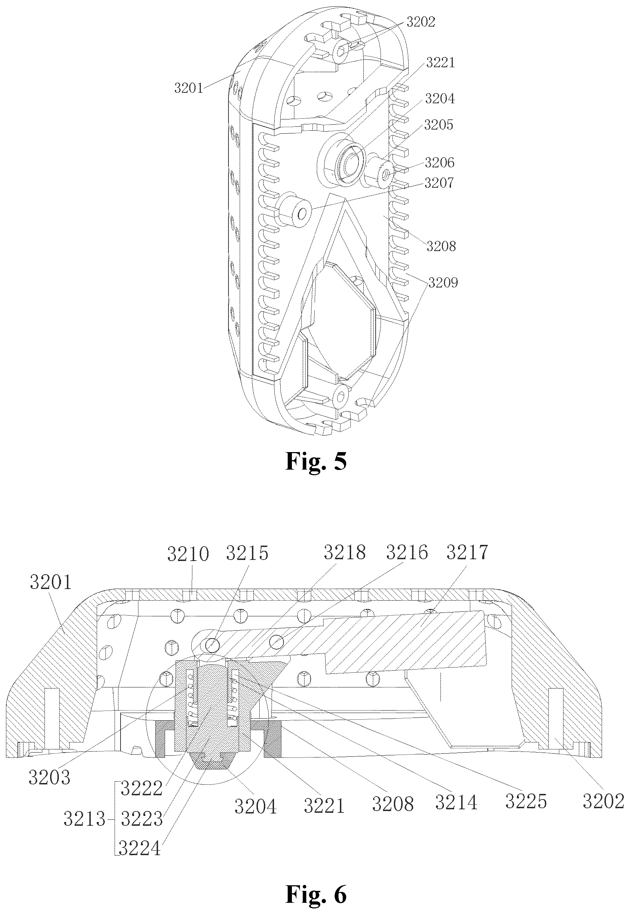

As shown in Fig. 1-Fig. 14, the drum washing machine with the hole-free inner drum of the front-open structure is simple in structure, and the space between the inner drum and the outer drum does not need to be filled with the washing/rinsing water, so that the washing water consumption of the washing machine is greatly reduced. The possibility of dirt adhesion between the inner drum and the outer drum is avoided. The user health and the user experience are greatly improved, and water resources are greatly saved.

The drum washing machine of the embodiment is provided with a housing 19. The housing 19 includes an upper deck plate 2, a front panel, a rear back plate and a bottom plate. Bottom feet 9 are fixedly installed on the bottom plate and used for supporting the whole washing machine. An outer drum 18 is arranged in the housing 19, and an inner drum 17 is coaxially arranged in the outer drum 18. The outer drum 18 is mainly used for collecting drained water of the inner drum 17 and drained water of high-speed centrifugal dewatering of the inner drum 17. The inner drum 17 rotates, and preferably, lifting ribs are arranged, so that the clothes are continuously lifted, dropped and beaten, and the clothes are conveniently cleaned. The inner drum 17 is of a hole-free structure. The outer drum 18 is provided with a central installing hole for installing and fixing a bearing 12; and an inner drum shaft 13 fixedly connected with the inner drum 17 penetrates through the bearing 12 and is connected with a driving motor 16. An inner drum door 6 capable of being opened/closed is installed on a drum opening in the front portion of the inner drum 17, and therefore the inner drum 17 is of a sealed cabin structure.

A machine door 5 capable of being opened/closed is installed on the housing 19.

### Embodiment 1

As shown in Figs. 1-2, the clothes lifting device for the washing machine and the drum washing machine are provided in the embodiment.

The clothes lifting device for the washing machine includes:
a body, which is internally provided with an accommodating chamber;
a water inlet, which is arranged in the body and communicates with the accommodating chamber;
a centrifugal drainage assembly, which is arranged in the accommodating chamber, wherein the initial state of the centrifugal drainage assembly is a closed state, and the centrifugal drainage assembly is opened for drainage under the action of centrifugal force; and
a filtering assembly, which is arranged on the water inlet of the body and is used for filtering water entering the accommodating chamber.

The clothes lifting device 32 of the disclosure can be installed on the inner wall of the inner drum of the drum washing machine, and in the clothes washing process, the clothes are lifted to a certain height along with rotation of the inner drum to be beaten. In the embodiment, the centrifugal drainage assembly is integrated in the clothes lifting device, the initial state of the centrifugal drainage assembly is closed state, the inner drum is kept closed to independently contain washing water, and the centrifugal drainage assembly can be opened to drain water under the action of centrifugal force, so that drainage of the drum washing machine with the hole-free inner drum is achieved.

Therefore, the centrifugal drainage assembly is arranged inside the lifting device 32, clothes lifting and drainage of the drum washing machine with the hole-free inner drum are achieved, modular supply is formed, production and assembly are facilitated, and the assembly efficiency is improved.

The centrifugal drainage assembly includes the compression spring to provide pressing force to keep the closed state which is the initial state of the centrifugal drainage assembly in the present embodiment, water where the centrifugal drainage assembly is located inevitably contains clothes thread scraps, and if the thread scraps are hung on the elastic piece, the thread scraps are not prone to falling off; even though drainage water flow, centrifugal water flow and centrifugal force cannot separate thread scraps from the elastic piece. Furthermore, due to the fact that the thread scraps hung on the elastic piece have a certain length, part of the non-hung parts reach a drainage hole of the inner drum and/or the position close to the sealing plunger under the action of drainage water flow, centrifugal water flow and centrifugal force, and sealing failure is caused.

As the centrifugal drainage assembly is an important drainage part of the hole-free inner drum, whether the centrifugal drainage assembly can work normally or not determines whether the hole-free inner drum can achieve the purposes of saving water and cleaning or not. Therefore, in order to avoid the influence on the centrifugal drainage assembly caused by the attachment of the thread scraps, the filtering assemblies are arranged on the water inlets of the body and are used for filtering the water entering the accommodating chamber. Thus, the accommodating chamber where the centrifugal drainage assembly is located becomes an area independent of the interior of the inner drum, the area is kept communicating with the inner drum through the water inlets, the filtering assembly can effectively filter thread scraps in water entering from the water inlets, the centrifugal drainage assembly is located in an environment without thread scraps or with few thread scraps. The possibility of attachment of thread scraps is fundamentally avoided, and the working reliability of the centrifugal drainage assembly is effectively guaranteed.

Further, the body in the embodiment includes a lifting shell 3201 internally provided with an open cavity and a lifting base body 3208 which is detachably installed at the open end of the open cavity of the lifting shell, and an accommodating chamber is formed between the lifting base body 3208 and the lifting shell. The centrifugal drainage assembly is installed on the lifting base body. The water inlets 3209 are arranged in the lifting shell, and the filtering assemblies are arranged on the water inlets 3209 of the lifting shell.

Specifically, the lifting shell 3201 includes a plurality of shell side walls which form a circle, the lifting base body 3208 is arranged in the opening of the lifting shell 3201 to be connected with the shell side walls, and the water inlets 3209 are arranged in the shell side walls and located at a joint of the shell side walls and the lifting base body and middles of edges of open ends of the shell side walls. The lifting base body 3028 is provided with a communicating portion communicating with the accommodating chamber.

In the embodiment, the water inlets 3209 are arranged in the middles of the edges of the open ends of the shell side walls, and are arranged close to the drum wall after being installed on the drum wall of the inner drum, so that centrifugal water flow can better flow into the lifting shell in a mode of being attached to the inner drum wall during water inlet and centrifugal water drainage.

Furthermore, the shell side walls include two first side walls extending in the axial direction of the inner drum 17 of the washing machine, an upper side wall and a lower side wall which are connected with the two ends of the two first side walls, wherein one ends of the two first side walls are in transition connection, and the water inlets 3209 are arranged in the two first side walls.

As an implementation mode of the embodiment, the filtering assembly includes a filter screen 33 and a filter screen frame 34 used for installing the filter screen 33, the filter screen frame 34 is arranged in the open cavity of the lifting shell 3201, and the filter screen 33 correspondingly covers the water inlets 3209.

Furthermore, a clamping groove is arranged in the inner wall face of the shell side wall, a clamping block is arranged on the filter screen frame 34, and the clamping block is clamped in the clamping groove and used for detachably installing the filter screen frame on the inner wall of the side wall of the lifting shell. In this way, the filtering assembly can be detached conveniently, and thread scraps can be cleared away.

Preferably, the clamping groove is a sliding groove extending along the shell side wall, and the clamping block is able to be clamped along the sliding groove in a sliding mode.

Furthermore, in order to achieve disassembly and assembly of the filtering assembly and clean thread scraps, the upper side wall or the lower side wall is provided with an opening for the filtering assembly to be inserted into or pulled out, and the filtering assembly further includes a blocking cover which seals the opening after the filter screen frame is inserted into the lifting shell from the upper side wall or the lower side wall.

As one implementation mode of the embodiment, the centrifugal drainage assembly includes a plunger base arranged in the middle of the lifting base body in a penetrating mode and a sealing plunger arranged in the plunger base in a reciprocating motion mode. The water inlets of the two first side walls are correspondingly provided with the filtering assemblies respectively, the plunger base is located between the two filtering assemblies, or the middle of each filtering assembly is provided with an avoiding channel corresponding to the plunger base.

### Embodiment 2

As shown in Figs. 1-10, the embodiment of the disclosure provides the clothes lifting device for the washing machine and the drum washing machine.

The clothes lifting device 32 for the washing machine includes:
a body, which is internally provided with an accommodating chamber;
a water inlet, which is arranged in the body and communicates with the accommodating chamber; and
a centrifugal drainage assembly, which is arranged in the accommodating chamber, wherein the initial state of the centrifugal drainage assembly is a closed state, and the centrifugal drainage assembly is opened for drainage under the action of centrifugal force.

The clothes lifting device can be installed on the inner wall of the inner drum of the drum washing machine, and in the clothes washing process, the clothes are lifted to a certain height along with rotation of the inner drum and are beaten to fall down. In the embodiment, the centrifugal drainage assembly is integrated in the clothes lifting device, the initial state of the centrifugal drainage assembly is the closed state, the inner drum is kept closed to independently contain washing water, and the centrifugal drainage assembly can be opened to drain water under the action of centrifugal force, so that drainage of the drum washing machine with the hole-free inner drum is achieved.

Therefore, the centrifugal drainage assembly is arranged in the lifting device, clothes lifting and drainage of the drum washing machine with the hole-free inner drum are achieved, modular supply is arranged, production and assembly are facilitated, and the assembly efficiency is improved.

As a preferable implementation mode of the embodiment, the centrifugal drainage assembly includes a sealing plunger capable of doing reciprocating motion and an elastic piece 3203 used for elastic reset of the sealing plunger, the body is provided with a plunger base used for installation of the sealing plunger, the sealing plunger is arranged in the plunger base in a reciprocating motion mode. The sealing plunger and the plunger base are each provided with a limiting structure used for abutting against and limiting the elastic piece.

The centrifugal drainage assembly in the present embodiment, the elastic piece 3203 is matched with the limiting structures respectively arranged on the sealing plunger and the plunger base, so that the sealing plunger is elastically abutted, the sealing plunger is kept in a normally-closed state, the hole-free inner drum is kept in a closed state, and the functional effects of water saving and self-cleaning of the drum washing machine with the hole-free inner drum are achieved.

Further, the sealing plunger includes a sealing column 3213 and a sealing plug 3204, the sealing column 3213 includes a guide column section 3222 and a sealing column section 3223 arranged at one end of the guide column section 3222, and the sealing plug 3204 is arranged at the end of the sealing column section 3223. The plunger base is provided with a sleeve portion, the sealing column section 3223 is arranged in the sleeve portion in a sliding and sealing mode, and the elastic piece is arranged in the sealing sleeve in a sealing mode through the sealing column section 3223.

The limiting structure includes a first limiting structure arranged on the guide column section 3222 and/or the sealing column section 3223 and a second limiting structure arranged at the end, away from the sealing portion, of the sleeve portion, and the two ends of the elastic piece 3203 abut against the first limiting structure and the second limiting structure respectively.

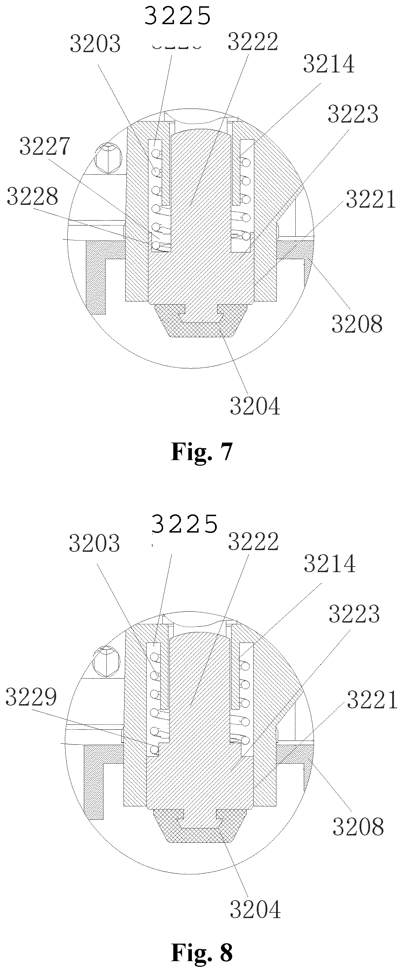

As shown in Fig. 7, as an implementation mode of the embodiment, the first limiting structure is a first limiting groove 3227 arranged in the end, close to the guide column section 3222, of the sealing column section 3223, and one end of the elastic piece 3203 abuts against the interior of the first limiting groove 3227.

Specifically, the sleeve portion includes a cylindrical sealing sleeve 3221, the guide column section 3222 and the sealing column section 3223 are both cylindrical, and the outer diameter of the guide column section 3222 is smaller than that of the sealing column section 3223; the outer diameter of the sealing column section 3223 is equal to or slightly smaller than the inner diameter of the sealing sleeve 3221; the first limiting groove 3227 is an annular limiting groove which is arranged in the sealing column section 3223 and located on the periphery of the guide column section 3222.

As shown in Fig. 8, as another implementation mode of the embodiment, the first limiting structure is a limiting boss 3229 arranged at the end, close to the guide column section 3222, of the sealing column section 3223, the elastic piece 3203 is a cylindrical spring, and the inner circumference of the cylindrical spring is connected to the limiting boss 3229 in a clamped mode.

Specifically, the sleeve portion includes a cylindrical sealing sleeve 3221, the guide column section 3222 and the sealing column section 3223 are both cylindrical, and the outer diameter of the guide column section 3222 is smaller than that of the sealing column section 3223; the outer diameter of the sealing column section 3223 is equal to or slightly smaller than the inner diameter of the sealing sleeve 3221; the limiting boss 3229 is a cylindrical boss arranged on the end face of the end, close to the guide column section 3222, of the sealing column section 3223, the outer diameter of the guide column section 3222 is smaller than that of the cylindrical boss, and the outer diameter of the cylindrical boss is smaller than that of the sealing column section 3223.

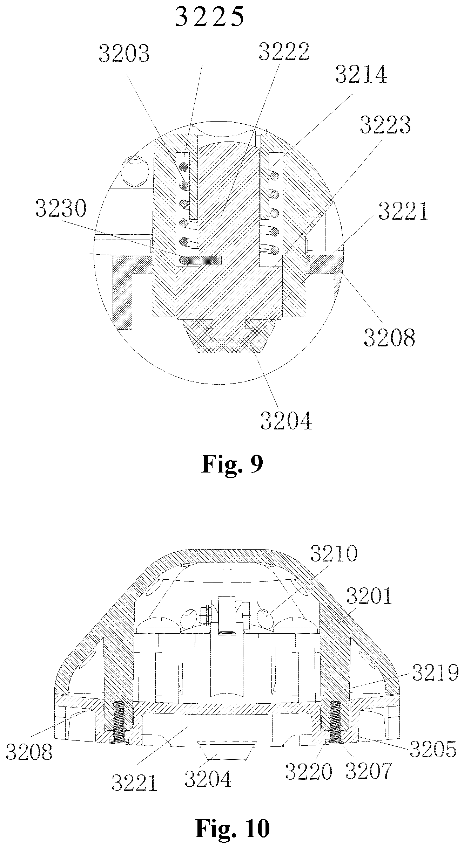

As shown in Fig. 9, as another implementation mode of the embodiment, the first limiting structure is a locking hole arranged in the guide column section 3222/sealing column section 3223, the elastic piece 3203 is provided with a locking rod 3230, and the locking rod 3230 is inserted into the limiting hole.

As shown in Figs. 7-9, the second limiting structure in the embodiment is a second limiting groove arranged in the end, away from the sealing column section 3223, in the sleeve portion.

Specifically, the sleeve portion includes a sealing sleeve 3221, the end portion, away from the sealing column section 3223, of the sealing sleeve 3221 is folded towards the interior of the sealing sleeve 3221 and extends in the radial direction of the sealing sleeve to form a horizontal flange, and the end portion of the horizontal flange is folded towards the interior of the sealing sleeve 3221 and extends along the axis to form a vertical flange. The vertical flange, the horizontal flange and the wall of the sealing sleeve 3221 jointly define an annular limiting groove.

Furthermore, the vertical flange forms a guide sleeve 3214 of the sleeve portion, and the guide column section 3222 is matched with the guide sleeve 3214, so that the guide column section 3222 reciprocates under the guide of the guide sleeve 3214.

### Embodiment 3

As shown in Fig. 1, Fig. 11, Fig. 12 and Fig. 13, the centrifugal drainage assembly includes the compression spring to provide pressing force to keep the closed state due to the fact that the initial state of the centrifugal drainage assembly is the closed state. Water where the centrifugal drainage assembly is located inevitably contains clothes thread scraps, and if the thread scraps are hung on the elastic piece, the thread scraps are not prone to falling off; even though drainage water flow, centrifugal water flow and centrifugal force cannot separate thread scraps from the elastic piece. Furthermore, due to the fact that the thread scraps hung on the elastic piece have a certain length, part of the non-hung parts reach a drainage hole of the inner drum and/or the position close to the sealing plunger under the action of drainage water flow, centrifugal water flow and centrifugal force, and sealing failure is caused.

As the centrifugal drainage assembly is an important drainage part of the hole-free inner drum, whether the centrifugal drainage assembly can work normally or not directly determines whether the hole-free inner drum can achieve the purposes of saving water and cleaning or not. Therefore, in order to prevent attachment of the thread scraps from affecting the centrifugal drainage assembly, the clothes lifting device 32 for the washing machine of the embodiment includes a lifting shell 3201, which is internally provided with an open cavity; a lifting base body 3208, which covers the open end of the lifting shell 3201 in a sealing mode to form an accommodating chamber; and an inlet water filtering portion, which is arranged on the lifting shell 3201 and/or the lifting base body 3208 to communicate with the accommodating chamber and is used for filtering inlet water of the accommodating chamber. Thus, the accommodating chamber where the centrifugal drainage assembly is located becomes an area independent of the interior of the inner drum, the area is kept communicating with the inner drum through the water inlet filtering portion and can effectively filter the thread scraps, the centrifugal drainage assembly is located in an environment without the thread scraps or with few thread scraps, the possibility of attachment of the thread scraps is fundamentally avoided, and the working reliability of the centrifugal drainage assembly is effectively ensured.

In order to filter water entering the accommodating chamber, as one implementation mode of the embodiment, the water inlet filtering portion includes a shell water inlet filtering portion arranged on the lifting shell 3201, and the shell water inlet filtering portion includes a plurality of water filtering holes arranged in the lifting shell and communicating with the accommodating chamber. According to the embodiment, the hole diameter of the water filtering holes is small, but the number of the water filtering holes distributed in the surface of the lifting shell 3201 is large, on one hand, the water inlet and outlet flow is guaranteed, and on the other hand, the thread scraps can be effectively filtered.

A plurality of spraying openings 3210 are arranged in the lifting shell 3201, the water inlet filtering portion includes a shell water inlet filtering portion arranged on the lifting shell, and the shell water inlet filtering portion is a filter screen covering all the spraying openings 3210. According to the embodiment, the size and the number of the spraying openings 3210 are not limited any more, the thread scraps can be filtered through the filter screen, and the filtering effect is better. In addition, in order to more conveniently mount and dismount the filter screen, a filter screen dismounting opening is arranged in the lifting shell 3201, and a cover plate capable of being opened/closed is installed on the filter screen dismounting opening.

In order to ensure that the accommodating chamber is located in an independent area, the lifting base body 3208 is a sealing cover plate matched with the open end of the lifting shell 3201.

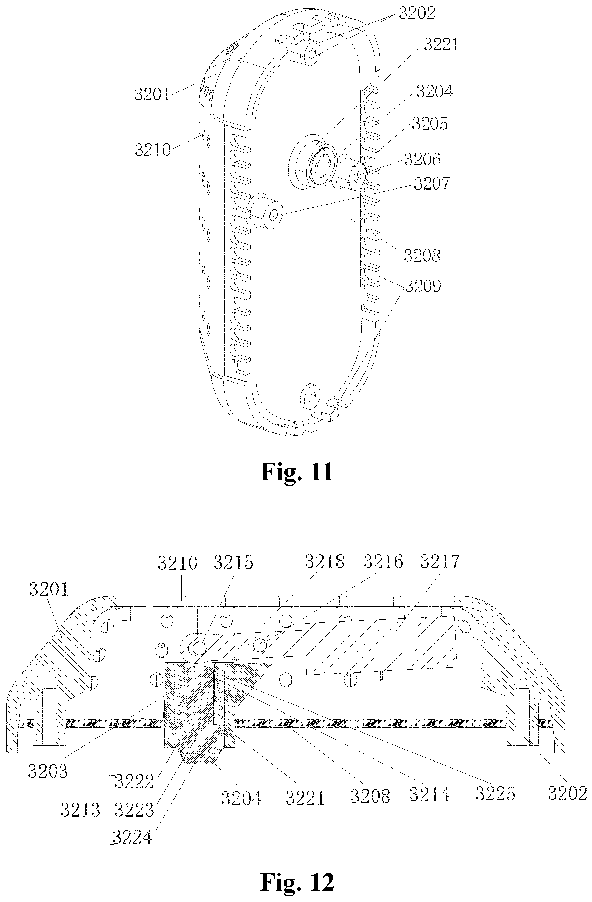

As shown in Fig. 12, not being part of the invention, the lifting base body 3208 of the embodiment is in a totally-closed state, and inlet water can only enter the accommodating chamber through the water filtering holes or the spraying openings 3210 in the lifting shell 3201.

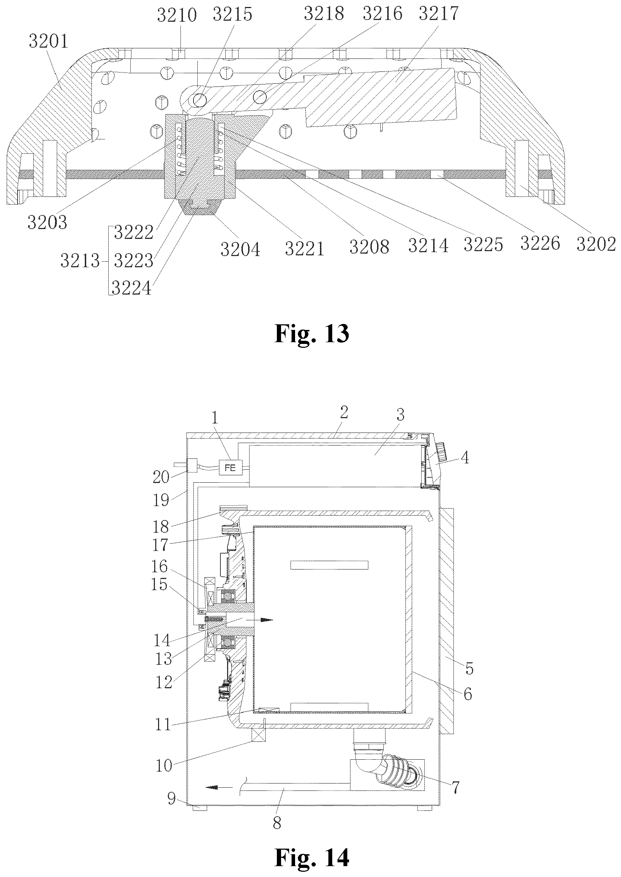

As shown in Fig. 13, the water inlet filtering portion of the embodiment includes a base body water inlet filtering portion arranged on the lifting base body 3208, and the base body water inlet filtering portion includes a plurality of base body water filtering holes 3226 which are arranged in the lifting base body 3208 and communicating with the accommodating chamber.

As another implementation mode of arranging the water inlet filtering portion on the lifting base body 3208 in the embodiment, the lifting base body 3208 is provided with a plurality of water permeable openings, the water inlet filtering portion includes a base body water inlet filtering portion arranged on the lifting base body, and the base body water inlet filtering portion is a filter screen covering all the water permeable openings. Similarly, in order to facilitate disassembly and assembly of the filter screen, a filter screen disassembly opening is arranged in the lifting shell 3201, and a cover plate capable of being opened and closed is installed on the filter screen disassembly opening.

In addition, the lifting shell 3201 includes an annular base portion 3211 and a protruding portion 3212, wherein the protruding portion 3212 and the annular base portion 3211 are integrally arranged, and the protruding portion 3212 protrudes and extends towards one side. In the embodiment, the lifting base body 3208 extends into the annular base portion 3211 and is fixedly connected with the annular base portion 3211 in the circumferential direction, and the annular base portion 3211 is provided with the water inlets 3209 so that water can enter the lifting base body 3208.

Similarly, in the embodiment, the water inlets 3209 can be designed into a plurality of water filtering holes with small hole diameters, or a filter screen is installed on the water inlets to achieve thread scrap filtering, and at the moment, the water inlet filtering portion does not need to be arranged on the lifting base body 3208 anymore.

Furthermore, the centrifugal drainage assembly includes a sealing plunger capable of moving in a reciprocating mode and an elastic piece 3203 used for elastic reset of the sealing plunger, the lifting base body 3208 is provided with a plunger base used for installing the sealing plunger, the sealing plunger is provided with a sealing portion, the plunger base is provided with a sleeve portion, and the sealing portion is arranged in the sleeve portion in a sliding and sealing mode, and the elastic piece is arranged in the sealing sleeve in a sealing mode through the sealing portion.

Further, the sealing plunger includes a sealing column 3213 and a sealing plug 3204, the sealing column 3213 includes a guide column section 3222, the sealing portion is a sealing column section 3223 arranged at one end of the guide column 3222, and the sealing plug 3204 is arranged at the end of the sealing column section 3223. The sleeve portion includes a guide sleeve 3214 and a sealing sleeve 3221, the guide column section 3222 is arranged in the guide sleeve 3214 in a reciprocating motion mode, and the sealing column section 3223 is arranged in the sealing sleeve 3221 in a sliding and sealing mode; the elastic piece 3203 is arranged in the guide sleeve 3214, one end of the elastic piece 3203 abuts against the guide sleeve 3214, and the other end of the elastic piece 3203 abuts against the guide column section 3222 or the sealing column section 3223. According to the embodiment of the disclosure, the guide column section 3222 reciprocates in the guide sleeve 3214 to drive the sealing plug 3204 to reciprocate along a determined path so as to realize the opening and closing control of the water outlet of the inner drum, and the sealing column section 3223 is arranged in the sealing sleeve 3221 in a sliding and sealing mode so as to realize the sealing of the elastic piece 3203 in the guide sleeve 3214, so that the elastic piece 3203 is prevented from being exposed and hanging the thread scraps.

Furthermore, the guide sleeve 3214 and the sealing sleeve 3221 are both cylindrical and have the same inner diameter, the guide column section 3222 and the sealing column section 3223 are both cylindrical, and the outer diameter of the guide column section 3222 is smaller than that of the sealing column section 3223. The outer diameter of the sealing column section 3223 is equal to or slightly smaller than the inner diameter of the sealing sleeve 3221.

Preferably, the guide sleeve 3214 and the sealing sleeve 3221 are integrally formed, and the guide column section 3222 and the sealing column section 3223 are integrally formed.

**In** addition, an inner ring matched with the guide column section 3222 is arranged in the guide sleeve 3214, the inner ring and the inner wall of the guide sleeve 3214 are arranged in a spaced mode, and an opening is arranged in the direction facing the sealing sleeve 3221 to form an installation cavity 3225 for installing the elastic piece 3203. Preferably, the elastic piece 3203 is a cylindrical spring which is arranged on the guide column section 3222 in a sleeving mode.

An installation column 3224 is arranged at the end of the sealing column section 3223, a limiting protruding ring is arranged on the installation column section 3224, the sealing plug 3204 is provided with a limiting groove with an opening, and the limiting protruding ring is installed in the limiting groove in a limited mode.

Further, the centrifugal drainage assembly includes a centrifugal piece which generates centrifugal motion under the action of centrifugal force, the centrifugal piece includes a connecting portion 3218 and a balance weight portion 3217, one end of the connecting portion 3218 is connected with the balance weight portion 3217, the other end of the connecting portion 3218 is rotatably connected with the sealing plunger 3213, and the middle of the connecting portion 3218 is rotatably installed on the plunger base to form a lever structure.

One end of the connecting portion 3218 is provided with a first connecting hole 3215 which is rotatably connected with the end portion of the sealing plunger 3213, and the middle of the connecting portion 3218 is provided with a second connecting hole 3216.

In order to achieve fixed connection between the lifting shell 3201 and the lifting base body 3208, the lifting base body 3208 is provided with a base body fixing column 3205, a connecting rib 3219 extending towards the open end is arranged in the open cavity of the lifting body 3201, and the base body fixing column 3205 is fixedly connected with the connecting rib 3219.

Preferably, the centrifugal drainage assembly is arranged in the middle of the lifting base body 3208, and the at least two base body fixing columns 3205 are symmetrically arranged on the two sides of the centrifugal drainage assembly.

Furthermore, the base body fixing column 3205 and the connecting rib 3219 are clamped and positioned through a clamping structure, and the base body fixing column 3205 and the connecting rib 3219 are fixedly connected through a connecting piece 3207 after being positioned.

Preferably, the connecting rib 3219 is provided with a clamping protrusion, the base body fixing column 3205 is provided with a channel for the connecting rib to stretch in, and the peripheral wall of the channel is provided with a clamping groove connected with the clamping protrusion in a matched and clamped mode.

The connecting rib 3219 is provided with a connecting hole, the base body fixing column 3205 is provided with a positioning hole opposite to the connecting hole, the connecting piece 3207 penetrates through the positioning hole to be fixedly connected with the connecting hole, and preferably, the connecting piece 3207 is a connecting screw.

In order to achieve the purpose that the lifting device is installed in the inner drum, shell fixing columns 3202 used for fixedly assembling the lifting device are arranged at the two ends of an opening of the lifting shell 3201 respectively, the positions, corresponding to the shell fixing columns 3202, of the lifting base body 3208 are arranged in an avoiding mode, and the shell fixing columns 3202 enable the structure, installed in the inner drum, of the lifting device to be unchanged. The learning cost of assembly is reduced, and the assembly efficiency is improved.

### Embodiment 4

As shown in Fig. 1, the embodiment of the disclosure also provides a drum washing machine with the clothes lifting device for the washing machine, including:
an inner drum 17; and
an inner drum door 6, which is installed on a drum opening of the inner drum 17 in an opened/closed mode;
when the inner drum door 6 is closed, the inner drum door 6 and the inner drum 17 jointly form an independent washing cavity, and washing water is independently contained when clothes are washed; and
a water outlet is arranged in the side wall of the inner drum 17, the lifting device 32 is installed on the water outlet in the inner wall of the inner drum 17, and the centrifugal water drainage assembly blocks and closes the water outlet.

According to the drum washing machine, the inner drum door 6 is installed on the drum opening of the inner drum 17, the inner drum 17 adopts the hole-free drum design, the inner drum door 6 and the inner drum 17 jointly form the independent washing cavity, washing water is independently contained when clothes are washed, and the space between the inner drum and the outer drum does not need to be filled with washing/rinsing water, so that the washing water consumption of the washing machine is greatly reduced; the possibility of dirt adhesion between the inner drum and the outer drum is avoided; the user health and the user experience are greatly improved, and water resources are greatly saved.

Furthermore, a fixing hole used for fixedly assembling the lifting device 32 is arranged in the side wall of the inner drum 17, the lifting device 32 is fixed to the fixing hole in a sealed mode through a connecting piece, the inner drum 17 is kept closed through sealed connection, and the purpose of independently containing washing water is achieved.

According to the control method of the drum washing machine, the washing machine includes an inner drum, washing water is contained in the inner drum when clothes are washed, a drainage hole is arranged in the side wall of the inner drum, and a lifting device for controlling the drainage hole to be switched on or switched off is installed on the drainage hole. And the control method includes the steps that in the clothes washing process of the washing machine, the rotation speed of the inner drum is controlled to reach or exceed the set rotation speed N0; a centrifugal drainage assembly of the lifting device opens the drainage hole under centrifugal force for inner drum drainage.

The drainage device is provided with the centrifugal drainage assembly in the present embodiment, according to the control method, the centrifugal drainage assembly is opened to achieve drainage by controlling the inner drum to rotate to generate centrifugal force, and drainage and dewatering of the drum washing machine with the hole-free inner drum are achieved in the mode of the centrifugal drainage assembly and program control.

As an implementation mode of the embodiment, after the washing machine executes a washing program or a rinsing program, the rotating speed of the inner drum is controlled to reach a first rotating speed N1 and is maintained for a set time t1, N1 is larger than or equal to N0, and N0 is larger than the rotating speed of the inner drum in the washing program or the rinsing program; when the rotating speed N1 of the inner drum is kept and the rotating time reaches t1, the inner drum is controlled to stop rotating and enter the next procedure.

Preferably, N1 is 110-400 revolutions per minute, more preferably, 170 +/-50 revolutions per minute, and further preferably, 150 +/-20 revolutions per minute; and
preferably, the range of t1 is between 0.1 and 5 minutes, and more preferably, the range of t1 is between 1 and 2 minutes.

Further, the washing machine includes a weighing device used for weighing the weight in the inner drum, the weighing device detects the weight WO in the inner drum before the inner drum starts to rotate at N1, the weighing device detects the weight W1 in the inner drum after the rotation time reaches t1, and the control system judges whether drainage is normal or not according to comparison between W1 and WO.

Furthermore, the control system judges whether drainage is abnormal or not by comparing the value k of W1/WO, if k is larger than or equal to 0.7, the control system judges that drainage is abnormal and gives an alarm, and if not, drainage is normal.

As another implementation mode of the embodiment, after the washing machine executes the washing program or the rinsing program, the rotating speed of the inner drum is controlled to reach the first rotating speed N1, N1 is larger than or equal to N0, and N0 is larger than the rotating speed of the inner drum in the washing program or the rinsing program; and after the water in the inner drum is completely drained, the inner drum is controlled to stop rotating to enter the next procedure.

Further, the washing machine includes a weighing device used for weighing the weight in the inner drum, and in the process that the washing machine controls the inner drum to rotate at N1, the control system judges whether drainage is completed or not according to the weight value, detected by the weighing device in real time, in the inner drum.

Further, the step that the control system judges whether drainage is completed or not according to the weight value, detected by the weighing device in real time, in the inner drum includes:
the weighing device detects weight values WO, W1, W2,..., Wt in the inner drum in real time;
the difference between the weighing values of the adjacent time is calculated, and n1 = W1-WO, n2 = W2-W1,..., nt = (Wt)-(Wt-1) are recorded; and
when nt is kept unchanged and tends to 0 within a certain period of time, drainage is completed.

Furthermore, the control system judges whether drainage is normal or not by comparing the change conditions of n1, n2,... and nt, and if n1 = n2 =... = nt = 0, the control system judges that drainage is abnormal and gives an alarm.

Further, the washing machine executes a dewatering program, and the lowest dewatering rotating speed N2 in the dewatering program is larger than or equal to N0.

### Embodiment 5

The embodiment of the disclosure mainly solves the problem of how to accurately determine the water inflow of the drum washing machine with the hole-free inner drum, and the specific solution is as follows:
as shown in Fig. 14, the drum washing machine includes an inner drum 17 and a water inlet pipeline communicating with the inner drum 17, the inner drum 17 is a hole-free inner drum and contains washing water when clothes are washed, and a flow sensor 1 used for detecting the water inlet flow is arranged on the water inlet pipeline.

According to the embodiment, the flow sensor 1 is arranged on the water inlet pipeline to monitor the water inlet flow, when the set water inlet amount is reached, the water inlet valve 20 is closed, and water inlet is completed. According to the embodiment, the flow sensor is adopted to solve the water inlet problem of the drum washing machine with the hole-free inner drum according to the set water level, the washing effect is ensured, the structure is simple, and control is convenient.

Further, the drum washing machine includes a water inlet valve 20 and a detergent box 3, the water inlet pipeline includes a first water inlet pipe and a second water inlet pipe, the outlet end of the water inlet valve 20 communicates with the detergent box 3 through the first water inlet pipe, and the outlet end of the detergent box 3 communicates with the inner drum 17 through the second water inlet pipe, and the flow sensor 1 is arranged on the first water inlet pipe or the second water inlet pipe.

Preferably, the flow sensor 1 is arranged on the first water inlet pipe, so that the detergent in the detergent box can be prevented from entering the flow sensor 1.

The drum washing machine includes a main controller 4, and the flow sensor 1 is electrically connected with the main controller 4 through a circuit. The main controller 4 can collect the water inlet amount of the inner drum 17 in real time, and the water inlet valve 20 is closed when the set water inlet amount is reached.

As an implementation mode of the embodiment, the flow sensor 1 is a rotor flow sensor, or a turbine flow sensor, or an ultrasonic flow sensor, or an electromagnetic flow sensor, or a pore plate flow sensor.

According to the embodiment, a flow sensor 1 can be arranged at any position of a water inlet pipeline, preferably, the flow sensor 1 is arranged at the rear portion of a water inlet valve 20 to accurately meter the flow of water entering the sealed inner drum 17, the flow sensor 1 is connected with the main controller 4 through a circuit, and the main controller 4 can collect the water inlet amount of the inner drum 17 in real time, so that the water inlet valve 20 is closed when the set water inlet amount is reached.

In order to feed water into the hole-free inner drum, the drum washing machine includes a driving motor 16 and an inner drum shaft 13, the driving motor 16 is in transmission connection with the inner drum 17 through the inner drum shaft 13 to drive the inner drum 17 to rotate, a hollow channel 14 communicating with the interior of the inner drum 17 is arranged in the inner drum shaft 13, and the water inlet pipeline communicates with the hollow channel of the inner drum shaft 13.

Specifically, the inner drum shaft 13 is connected with a driving motor 16, the driving motor 16 includes a stator and a rotor, and the rotor is fixedly connected with the inner drum shaft 13; a through hole is arranged in the center of the rotor, and the water inlet pipeline penetrates through the through hole of the rotor to communicate with the hollow channel 14 of the inner drum shaft 13.

Furthermore, a first dynamic sealing structure 15 is arranged between the water inlet pipeline and the through hole of the rotor, and a second sealing structure is arranged between the through hole of the rotor and the hollow channel 14 of the inner drum shaft 13.

In order to achieve drainage of the hole-free inner drum, the drum washing machine includes an outer drum 18, an inner drum drainage hole is arranged in the side wall of the inner drum 17, a normally-closed one-way valve plug 11 is installed in the inner drum drainage hole, and an ejector rod mechanism 10 used for ejecting the one-way valve plug 11 open for drainage is installed on the outer drum 18.

As an implementation mode of the embodiment, a locking mechanism used for locking rotation of the inner drum 17 is further arranged on the outer drum 18, and after the locking mechanism locks the inner drum, the ejector rod mechanism 10 ejects the one-way valve plug 11 open for drainage.

As another implementation mode of the embodiment, a plurality of dewatering holes are arranged in the side wall of the inner drum 17, centrifugal valves are installed on the dewatering holes, the inner drum is controlled to reach a certain rotating speed, and the centrifugal valves are opened under the action of dewatering centrifugal force to conduct washing drainage or dewatering drainage.

The embodiment of the disclosure also provides a control method of the drum washing machine, the washing machine executes a washing/rinsing program, in the water inlet process, the flow sensor detects the water inlet flow value in real time, the washing machine calculates the water inlet amount according to the water inlet flow value and the water inlet time, and water inlet is stopped when the water inlet amount reaches the set water inlet amount of the washing machine.

The drum washing machine is provided with a plurality of water inlet flow values which can be selected by a user, and water is fed into the washing machine according to the water inlet flow value selected by the user.

The drum washing machine has a clothes weighing function, and water can be fed by determining the water inlet flow value according to the weight of clothes.

The above embodiments can be implemented independently and can also be implemented in a combined mode.

## Claims

1. A clothes lifting device for a washing machine having an imperforated inner drum, the clothes lifting device comprising:
a body being configured to be internally provided with an accommodating chamber;
water inlets (3209) being arranged in the body and being configured to communicate with the accommodating chamber;
a centrifugal drainage assembly being arranged in the accommodating chamber, said centrifugal drainage assembly being configured in an initial state of the centrifugal drainage assembly to be closed, and to open for drainage under an action of centrifugal force; and
a filtering assembly being arranged on the water inlets (3209) of the body for filtering water entering the accommodating chamber,
wherein the body comprises a lifting shell (3201), which is internally provided with an open cavity; and a lifting base body (3208), which is detachably installed at an open end of the open cavity of the lifting shell (3201) to form the accommodating chamber with the lifting shell (3201); the centrifugal drainage assembly is installed on the lifting base body (3208); the water inlets (3209) are arranged in the lifting shell (3201), and the filtering assemblies are arranged on the water inlets (3209) of the lifting shell (3201)
wherein a plurality of spraying openings (3210) are arranged in the lifting shell (3201) and **characterised in that**
the water inlet filtering portion includes a base body water inlet filtering portion arranged on the lifting base body (3208), and the base body water inlet filtering portion includes a plurality of base body water filtering holes (3226) which are arranged in the lifting base body (3208) and communicating with the accommodating chamber.

2. The clothes lifting device for the washing machine according to claim 1, wherein the lifting shell (3201) comprises a plurality of shell side walls which form a circle, and the lifting base body (3208) is inside the open end of the open cavity of the lifting shell (3201) to be connected with the shell side walls, the water inlets (3209) are arranged in the shell side walls and located between a joint of the shell side walls and the lifting base body (3208) and middles of edges of open ends of the shell side walls, and the lifting base body (3208) is provided with a communicating portion communicates with the accommodating chamber.

3. The clothes lifting device for the washing machine according to claim 2, wherein the shell side walls comprise two first side walls extending in an axial direction of an inner drum (17) of the washing machine, and an upper side wall and a lower side wall which are connected with two ends of the two first side walls, wherein the two first side walls are in transition connection with each other, and the water inlets (3209) are arranged in the two first side walls.

4. The clothes lifting device for the washing machine according to claim 2 or 3, wherein the filtering assembly comprises a filter screen (33) and a filter screen frame (34) used for installing the filter screen (33), the filter screen frame (34) is arranged in the open cavity of the lifting shell (3201), and the filter screen (33) correspondingly covers the water inlets (3209).

5. The clothes lifting device for the washing machine according to claim 4, wherein a clamping groove is arranged in an inner wall of the shell side walls, a clamping block is arranged on the filter screen frame (34), and the clamping block is clamped in the clamping groove for detachably installing the filter screen frame (34) on an inner side wall of the lifting shell (3201).

6. The clothes lifting device for the washing machine according to claim 5, wherein the clamping groove is a sliding groove extending along the shell side walls, and the clamping block is able to be clamped along the sliding groove in a sliding mode.

7. The clothes lifting device for the washing machine according to claim 5 or 6, wherein the upper side wall or the lower side wall is provided with an opening for the filtering assembly to be inserted into or pulled out, and the filtering assembly further comprises a blocking cover which seals the opening after the filter screen frame (34) is inserted into the lifting shell (3201) from the upper side wall or the lower side wall.

8. The clothes lifting device for the washing machine according to claim 4, wherein the centrifugal drainage assembly comprises a plunger base arranged in a middle of the lifting base body (3208) in a penetrating mode and a sealing plunger (3213) arranged in the plunger base in a reciprocating motion mode; the water inlets (3209) of the two first side walls are correspondingly provided with the filtering assembly respectively, the plunger base is located between the two filtering assemblies, or a middle part of the filtering assembly is provided with an avoiding channel corresponding to the plunger base.

9. The clothes lifting device for the washing machine according to claim 8, wherein the centrifugal drainage assembly comprises a centrifugal piece which generates centrifugal motion under the action of centrifugal force, the centrifugal piece comprises a connecting portion (3218) and a balance weight portion (3217), one end of the connecting portion (3218) is connected with the balance weight portion (3217), an other end of the connecting portion (3218) is rotatably connected with the sealing plunger (3213), and a middle of the connecting portion (3218) is rotatably mounted on the plunger base to form a lever structure.

10. The clothes lifting device for the washing machine according to claim 9, wherein the connecting portion (3218) is a connecting rod, the balance weight portion (3217) is a balance weight block, the plunger base is provided with an extending portion extending towards the balance weight portion (3217), and a middle of the connecting rod is rotatably connected with the extending portion through a rotating shaft.

11. A drum washing machine with the clothes lifting device for the washing machine according to any one of claims 1 to 10, comprising:
an imperforated inner drum (17);
an inner drum door (6) being configured to install on a drum opening of the inner drum (17) in an opened/closed mode; wherein
when the inner drum door (6) is closed, the inner drum door (6) and the inner drum (17) jointly form an independent washing chamber, and washing water is independently contained when clothes are washed; and
a water outlet is arranged in a side wall of the inner drum (17), the lifting device is installed on the water outlet in the inner wall of the inner drum (17), and the centrifugal water drainage assembly blocks and closes the water outlet.

## Patentansprüche

1. Wäschehebevorrichtung für eine Waschmaschine mit einer unperforierten inneren Trommel, wobei die Wäschehebevorrichtung umfasst:
einen Körper, der dazu konfiguriert ist, im Inneren mit einer Aufnahmekammer versehen zu sein;
Wassereinlässe (3209), die in dem Körper angeordnet und dazu konfiguriert sind, mit der Aufnahmekammer in Verbindung zu stehen;
eine Zentrifugalablassanordnung, die in der Aufnahmekammer angeordnet ist, wobei die Zentrifugalablassanordnung dazu konfiguriert ist, in einem Anfangszustand der Zentrifugalablassanordnung geschlossen zu sein und sich zum Ablassen unter einer Wirkung der Zentrifugalkraft zu öffnen;
eine Filterungsanordnung, die an den Wassereinlässen (3209) des Körpers angeordnet ist, um das in die Aufnahmekammer eintretende Wasser zu filtern,
wobei der Körper eine Hebeschale (3201) umfasst, die im Inneren mit einem offenen Hohlraum versehen ist; und einen Hebebasiskörper (3208), der abnehmbar an einem offenen Ende des offenen Hohlraums der Hebeschale (3201) installiert ist, um die Aufnahmekammer mit der Hebeschale (3201) zu bilden; die Zentrifugalablassanordnung auf dem Hebebasiskörper (3208) installiert ist; die Wassereinlässe (3209) in der Hebeschale (3201) angeordnet sind, und die Filterungsanordnungen an den Wassereinlässen (3209) der Hebeschale (3201) angeordnet sind,
wobei eine Vielzahl von Sprühöffnungen (3210) in der Hebeschale (3201) angeordnet sind, und
**dadurch gekennzeichnet, dass**
der Wassereinlassfilterungsabschnitt einen Basiskörper-Wassereinlassfilterungsabschnitt aufweist, der an dem Hebebasiskörper (3208) angeordnet ist, und der Basiskörper-Wassereinlassfilterungsabschnitt eine Vielzahl von Basiskörper-Wasserfilterungslöchern (3226) aufweist, die in dem Hebebasiskörper (3208) angeordnet sind und mit der Aufnahmekammer in Verbindung stehen.

2. Wäschehebevorrichtung für die Waschmaschine nach Anspruch 1, wobei die Hebeschale (3201) eine Vielzahl von Schalenseitenwänden umfasst, die einen Kreis bilden, und der Hebebasiskörper (3208) sich innerhalb des offenen Endes des offenen Hohlraums der Hebeschale (3201) befindet, um mit den Schalenseitenwänden verbunden zu werden, die Wassereinlässe (3209) in den Schalenseitenwänden angeordnet sind und sich zwischen einer Verbindung der Schalenseitenwände und dem Hebebasiskörper (3208) und den Mitten der Kanten der offenen Enden der Schalenseitenwände befinden, und der Hebebasiskörper (3208) mit einem Verbindungsabschnitt versehen ist, der mit der Aufnahmekammer in Verbindung steht.

3. Wäschehebevorrichtung für die Waschmaschine nach Anspruch 2, wobei die Schalenseitenwände zwei erste Seitenwände umfassen, die sich in axialer Richtung einer inneren Trommel (17) der Waschmaschine erstrecken, und eine obere Seitenwand und eine untere Seitenwand, die mit zwei Enden der zwei ersten Seitenwände verbunden sind, wobei die zwei ersten Seitenwände in Übergangsverbindung miteinander stehen und die Wassereinlässe (3209) in den zwei ersten Seitenwänden angeordnet sind.

4. Wäschehebevorrichtung für die Waschmaschine nach Anspruch 2 oder 3, wobei die Filterungsanordnung ein Filtersieb (33) und einen Filtersiebrahmen (34) umfasst, der zum Einbau des Filtersiebs (33) dient, der Filtersiebrahmen (34) in dem offenen Hohlraum der Hebeschale (3201) angeordnet ist, und das Filtersieb (33) die Wassereinlässe (3209) entsprechend abdeckt.

5. Wäschehebevorrichtung für die Waschmaschine nach Anspruch 4, wobei in einer Innenwand der Schalenseitenwände eine Klemmnut angeordnet ist, an dem Filtersiebrahmen (34) ein Klemmblock angeordnet ist und der Klemmblock in der Klemmnut festgeklemmt ist, um den Filtersiebrahmen (34) an einer inneren Seitenwand der Hebeschale (3201) abnehmbar zu installieren.

6. Wäschehebevorrichtung für die Waschmaschine nach Anspruch 5, wobei die Klemmnut eine Gleitnut ist, die sich entlang der Schalenseitenwände erstreckt, und der Klemmblock dazu in der Lage ist, entlang der Gleitnut in einem Gleitmodus geklemmt zu werden.

7. Wäschehebevorrichtung für die Waschmaschine nach Anspruch 5 oder 6, wobei die obere Seitenwand oder die untere Seitenwand mit einer Öffnung versehen ist, in welche die Filterungsanordnung eingesetzt oder herausgezogen werden kann, und die Filterungsanordnung ferner eine Blockierabdeckung umfasst, welche die Öffnung abdichtet, nachdem der Filtersiebrahmen (34) von der oberen Seitenwand oder der unteren Seitenwand aus in die Hebeschale (3201) eingesetzt worden ist.

8. Wäschehebevorrichtung für die Waschmaschine nach Anspruch 4, wobei die Zentrifugalablassanordnung eine Stößelbasis umfasst, die in einer Mitte des Hebebasiskörpers (3208) in einem durchdringenden Modus angeordnet ist, und einen Dichtungsstößel (3213), der in der Stößelbasis in einem Hin- und Herbewegungsmodus angeordnet ist; wobei die Wassereinlässe (3209) der beiden ersten Seitenwände jeweils entsprechend mit der Filterungsanordnung versehen sind, die Stößelbasis zwischen den beiden Filterungsanordnungen angeordnet ist, oder ein mittlerer Teil der Filterungsanordnung mit einem Ausweichkanal versehen ist, der der Stößelbasis entspricht.

9. Wäschehebevorrichtung für die Waschmaschine nach Anspruch 8, wobei die Zentrifugalablassanordnung ein Zentrifugalstück umfasst, das unter der Wirkung der Zentrifugalkraft eine Zentrifugalbewegung erzeugt, wobei das Zentrifugalstück einen Verbindungsabschnitt (3218) und einen Ausgleichsgewichtsabschnitt (3217) umfasst, ein Ende des Verbindungsabschnitts (3218) mit dem Ausgleichsgewichtsabschnitt (3217) verbunden ist, ein anderes Ende des Verbindungsabschnitts (3218) drehbar mit dem Dichtungsstößel (3213) verbunden ist, und eine Mitte des Verbindungsabschnitts (3218) drehbar an der Stößelbasis montiert ist, um eine Hebelstruktur zu bilden.

10. Wäschehebevorrichtung für die Waschmaschine nach Anspruch 9, wobei der Verbindungsabschnitt (3218) eine Verbindungsstange ist, der Ausgleichsgewichtsabschnitt (3217) ein Ausgleichsgewichtsblock ist, die Stößelbasis mit einem Verlängerungsabschnitt versehen ist, der sich in Richtung des Ausgleichsgewichtsabschnitts (3217) erstreckt, und eine Mitte der Verbindungsstange drehbar mit dem Verlängerungsabschnitt durch eine Drehwelle verbunden ist.

11. Trommelwaschmaschine mit der Wäschehebevorrichtung für die Waschmaschine nach einem der Ansprüche 1 bis 10, umfassend:
eine unperforierte innere Trommel (17);
eine Tür (6) der inneren Trommel, die dazu konfiguriert ist, an einer Trommelöffnung der inneren Trommel (17) in einem geöffneten/geschlossenen Modus installiert zu sein; wobei
wenn die Tür (6) der inneren Trommel geschlossen ist, die Tür (6) der inneren Trommel und die innere Trommel (17) gemeinsam eine unabhängige Waschkammer bilden, und Waschwasser beim Waschen der Wäsche unabhängig enthalten ist; und
ein Wasserauslass in einer Seitenwand der inneren Trommel (17) angeordnet ist, die Hebevorrichtung an dem Wasserauslass in der Innenwand der inneren Trommel (17) installiert ist und die Zentrifugalwasserablassanordnung den Wasserauslass blockiert und verschließt.

## Revendications

1. Dispositif de levage de vêtements pour machine à laver comportant un tambour intérieur non perforé, le dispositif de levage de vêtements comprenant:
un corps étant configuré pour être pourvu intérieurement d'une chambre de logement;
des entrées d'eau (3209) étant disposées dans le corps et étant configurées pour communiquer avec la chambre de logement;
un ensemble de drainage centrifuge disposé dans la chambre logement, ledit ensemble de drainage centrifuge étant configuré selon un état initial de l'ensemble de drainage centrifuge pour être fermé, et pour ouvrir pour le drainage sous l 'action d'une force centrifuge; et
un ensemble de filtrage disposé sur les entrées d'eau (3209) du corps pour filtrer l'eau entrant dans la chambre de logement,
dans lequel le corps comprend une coque de levage (3201), qui est pourvue intérieurement d'une cavité ouverte; et un corps de base de levage (3208), qui est installé de manière amovible à une extrémité ouverte de la cavité ouverte de la coque de levage (3201) pour former la chambre de logement avec la coque de levage (3201); l'ensemble de drainage centrifuge est installé sur le corps de base de levage (3208); les entrées d'eau (3209) sont disposées dans la coque de levage (3201), et les ensembles de filtrage sont disposés sur les entrées d'eau (3209) de la coque de levage (3201),
dans lequel une pluralité d'ouvertures de pulvérisation (3210) sont disposées dans la coque de levage (3201), et
**caractérisé en ce que**
la partie de filtrage d'entrée d'eau comprend une partie de filtrage d'entrée d'eau de corps de base disposée sur le corps de base de levage (3208), et la partie de filtrage d'entrée d'eau de corps de base comprend une pluralité d'orifices de filtrage d'eau de corps de base (3226) qui sont disposés dans le corps de base de levage (3208) et en communication avec la chambre de logement.

2. Dispositif de levage de vêtements pour machine à laver selon la revendication 1, dans lequel la coque de levage (3201) comprend une pluralité de parois latérales de coque qui forment un cercle, et le corps de base de levage (3208) se trouve à l'intérieur de l'extrémité ouverte de la cavité ouverte de la coque de levage (3201) pour être relié aux parois latérales de la coque, les entrées d'eau (3209) sont disposées dans les parois latérales de la coque et situées entre un joint des parois latérales de la coque et le corps de la base de levage (3208) et des milieux des bords des extrémités ouvertes des parois latérales de la coque, et le corps de base de levage (3208) est pourvu d'une partie de communication qui communique avec la chambre de logement.

3. Dispositif de levage de vêtements pour machine à laver selon la revendication 2, dans lequel les parois latérales de la coque comprennent deux premières parois latérales s'étendant dans une direction axiale d'un tambour intérieur (17) de la machine à laver, et une paroi latérale supérieure et une paroi latérale inférieure qui sont reliées à deux extrémités des deux premières parois latérales, dans lequel les deux premières parois latérales sont en connexion de transition l'une avec l'autre, et les entrées d'eau (3209) sont disposées dans les deux premières parois latérales.

4. Dispositif de levage de vêtements pour machine à laver selon la revendication 2 ou 3, dans lequel l'ensemble de filtrage comprend un écran de filtrage (33) et un cadre d'écran de filtrage (34) utilisé pour l'installation de l'écran de filtrage (33), le cadre de l'écran de filtrage (34) est disposé dans la cavité ouverte de la coque de levage (3201), et l'écran de filtrage (33) recouvre de manière correspondante les entrées d'eau (3209).

5. Dispositif de levage de vêtements pour machine à laver selon la revendication 4, dans lequel une rainure de serrage est disposée dans une paroi intérieure des parois latérales de la coque, un bloc de serrage est disposé sur le cadre de l'écran de filtrage (34), et le bloc de serrage est serré dans la rainure de serrage pour installer de manière amovible le cadre de l'écran de filtrage (34) sur une paroi latérale intérieure de la coque de levage (3201).

6. Dispositif de levage de vêtements pour machine à laver selon la revendication 5, dans lequel la rainure de serrage est une rainure coulissante s'étendant le long des parois latérales de la coque, et le bloc de serrage peut être serré le long de la rainure coulissante en mode coulissant.

7. Dispositif de levage de vêtements pour machine à laver selon la revendication 5 ou 6, dans lequel la paroi latérale supérieure ou la paroi latérale inférieure est pourvue d'une ouverture pour l'insertion ou l'extraction de l' ensemble de filtrage, et l' ensemble de filtrage comprend en outre un couvercle de blocage qui scelle l'ouverture après que le cadre de l'écran de filtrage (34) est inséré dans la coque de levage (3201) à partir de la paroi latérale supérieure ou de la paroi latérale inférieure.

8. Dispositif de levage de vêtements pour machine à laver selon la revendication 4, dans lequel l'ensemble de drainage centrifuge comprend une base de piston disposée au milieu du corps de base de levage (3208) de manière pénétrante et un piston d'étanchéité (3213) disposé dans la base de piston en mode de mouvement de va-et-vient; les entrées d'eau (3209) des deux premières parois latérales sont respectivement pourvues de l'ensemble de filtrage, la base de piston est située entre les deux ensembles de filtrage, ou une partie centrale de l'ensemble de filtrage est pourvue d'un canal d'évitement correspondant à la base de piston.

9. Dispositif de levage de vêtements pour machine à laver selon la revendication 8, dans lequel l'ensemble de drainage centrifuge comprend une pièce centrifuge qui génère un mouvement centrifuge sous l'action de la force centrifuge, la pièce centrifuge comprend une partie de connexion (3218) et une partie de contrepoids (3217), une extrémité de la partie de connexion (3218) est reliée à la partie de contrepoids (3217), une autre extrémité de la partie de connexion (3218) est reliée de manière rotative au piston d'étanchéité (3213), et un milieu de la partie de connexion (3218) est monté en rotation sur la base du piston pour former une structure de levier.

10. Dispositif de levage de vêtements pour machine à laver selon la revendication 9, dans lequel la partie de connexion (3218) est une bielle, la partie de contrepoids (3217) est un bloc de contrepoids, la base de piston est pourvue d'une partie d'extension s'étendant vers la partie de contrepoids (3217), et un milieu de la bielle est relié de manière rotative à la partie d'extension par l'intermédiaire d'un arbre rotatif.

11. Machine à laver à tambour doté du dispositif de levage des vêtements pour la machine à laver selon l'une quelconque des revendications 1 à 10, comprenant:
un tambour intérieur non perforé (17);
une porte de tambour intérieure (6) étant configurée pour être installée sur une ouverture de tambour du tambour intérieur (17) en mode ouvert/fermé ; dans lequel
lorsque la porte du tambour intérieure (6) est fermée, la porte du tambour intérieure (6) et le tambour intérieur (17) forment ensemble une chambre de lavage indépendante, et l'eau de lavage est contenue indépendamment lorsque les vêtements sont lavés; et
une sortie d'eau est disposée dans une paroi latérale du tambour intérieur (17), le dispositif de levage est installé sur la sortie d'eau dans la paroi intérieure du tambour intérieur (17), et l'ensemble de drainage d'eau centrifuge bloque et ferme la sortie d'eau.
